# EUROPEAN PATENT APPLICATION

(11) **EP 4 224 799 A1**
(43) Date of publication of application: **09.08.2023**
(21) Application number: 23155090.6
(22) Date of filing: 06.02.2023
(51) Int. Cl.: H04L 12/28, G05B 15/02

(54) **ACTIVITY BASED MOOD SETTINGS**

(30) Priority: 04.02.2022 BE 202205074
(71) Applicant: Niko NV, 9100 Sint-Niklaas (BE)
(72) Inventor: VERBIEST, Nele, 9100 Sint-Niklaas (BE); DE BOCK, Yannick, 9120 Beveren (BE)
(74) Representative: Winger

(57) **Abstract**

The present invention provides a method for automatically create a mood setting in a room of a house or building. The method comprises tracking a primary activity of at least one occupant in the room by means of a radar sensor, determining the time at which the tracked primary activity takes place, determining a location within the room where the primary activity of the at least one occupant was tracked, from the tracked primary activity and the time, determining the exact activity of the at least one occupant and correlating the exact activity to a pre-programmed or stored mood setting which may be stored in a storage medium of the home automation system. When the pre-programmed mood setting is determined, a signal is sent to activate the at least one electric or electronic device according to the correlated mood setting.

## Description

### Technical field of the invention

The present invention relates to mood settings in a home automation system. More particularly, the present invention relates to a method for automatically creating a mood setting in a room of a house or building.

### Background of the invention

Nowadays, electric or electronic devices in a lot of homes are part of and controlled by a home automation system. Therefore, the home automation system may also comprise sensors for activating the electric or electronic devices in the home automation system based on the information from the sensors.

Different mood settings can be created by a user by activating one or more electric or electronic devices in a particular setting. In most of the home automation systems, mood settings can be preprogrammed by the user. However, the user has to activate them himself if he wants a certain mood setting. Often, a user always want to have the same mood setting whenever he or she performs a same activity. Then he or she always has to manually activate that certain mood setting if he or she starts that activity.

WO 2015/057689 describes an automation and control system. The system comprises a system controller, sensor devices and electric or electronic devices which are interconnected and physically distinct devices with respect to one another. Each sensor gathers information about the environment that is accessible by the sensor. Each sensor is configured to monitor a particular physical condition. The sensor senses a change in the condition being monitored and is configured to report that state of the condition by providing input signals to the system controller. The system controller executes and coordinates the actions to be taken by one or more electric or electronic devices based on the input signals from the sensors and one or more memorized states of at least one processing event. The controller receives information about the states of the sensor devices and the electric or electronic devices and maintains one or more memorized states of processing events, including points in time when they occurred.

In WO 2015/057689, one or more sensors detect an action and a processing system determines the activity. However, only decisions can be taken with respect to people are home and awake, people are home but sleeping and people are away from home. Specific activities cannot be determined and hence, moods can also not be adapted to specific activities that are going on in the home or building.

### Summary of the invention

It is an object of embodiments of the present invention to provide a method for automatically create a mood setting in a room of a house or building.

The above objective is accomplished by a method according to embodiments of the present invention.

The present invention provides a method for automatically create a mood setting in a room of a house or building by using a home automation system. The method comprises tracking a primary activity of at least one occupant in the room by means of a radar sensor, determining the time at which the tracked primary activity takes place, determining a location within the room where the primary activity of the at least one occupant was tracked, from the tracked primary activity and the related time and location, determining the exact activity of the at least one occupant and correlating the exact activity to a mood setting from a pre-programmed or stored list of mood settings which may be stored in a storage medium of the home automation system. When the mood setting is determined, a signal is sent from a controller of a control and communication means of a home automation system to at least one electric or electronic device for activating that at least one electric or electronic device according to the correlated mood setting.

A method according to embodiments of the invention makes it easy for an occupant to create a mood for each activity he or she performs. The occupant does not always have to manually set each device in a status that he or she wants at that moment or when he or she performs an activity in a room in the house or building. He or she can just start doing the activity he or she wants, and the mood settings as preferred are automatically set.

According to other embodiments, the method may furthermore comprise tracking energy consumption correlated with the tracked activity of the at least one occupant, and linking this energy consumption to the tracked primary activity and the determined time or to the tracked primary activity, the determined time and the determined location for determining the exact activity of the at least one occupant.

According to still further embodiments, the method may furthermore comprise, before determining the exact activity of the at least one occupant tracking a secondary activity of the at least one occupant in the room, and linking this secondary activity to the tracked primary activity and the determined time, to the tracked primary activity, the determined time and the determined location or to the tracked primary activity, the determined time, the determined location and the tracked secondary activity for determining the exact activity of the at least one occupant.

The more "features" of the activity are determined, the more accurate the exact activity can be determined and the more accurate the method according to embodiments of the invention will be, i.e. the more accurate the determined mood setting will be.

The method may furthermore comprise sending a message to the at least one occupant for informing the at least one occupant of the mood that will be set. The message can be sent via a controller of the home automation system to, for example, a smart switch with a screen, a wall display (e.g. a touch screen), a smartphone or a tablet.

According to embodiments of the invention, the occupant may the accept or reject the suggested mood.

If the occupant accepts the mood settings, the at least one electric or electronic device for creating the mood setting after. However, the mood setting can still manually be changed or adapted of at least one of the at least one electric or electronic device, if he would like to deviate from the standard mood settings correlated to the activity he or she is performing..

### Brief description of the drawings

It has to be noted that same reference signs in the different figures refer to same, similar or analogous elements.
Fig. 1 schematically illustrates a method according to embodiments of the invention.
Fig. 2 schematically illustrates a method according to embodiments of the invention.

### Description of illustrative embodiments

In the description different embodiments will be used to describe the invention. Therefore reference will be made to different drawings. It has to be understood that these drawings are intended to be non-limiting, the invention is only limited by the claims. The drawings are thus for illustrative purposes, the size of some of the elements in the drawings may be exaggerated for clarity purposes.

The term "comprising" is not to be interpreted as limiting the invention in any way. The term "comprising", used in the claims, is not intended to be restricted to what means is described thereafter; it does not exclude other elements, parts or steps.

The term "connected" as used in the claims and in the description has not to be interpreted as being restricted to direct connections, unless otherwise specified. Thus, part A being connected to part B is not limited to part A being in direct contact to part B, but also includes indirect contact between part A and part B, in other words also includes the case where intermediate parts are present in between part A and part B.

Not all embodiments of the invention comprise all features of the invention. In the following description and claims, any of the claimed embodiments can be used in any combination.

The present invention provides a method for automatically creating a mood setting in a room of a house or building. The method comprises tracking a primary activity of at least one occupant in the room by means of a radar sensor, determining the time at which the tracked primary activity takes place, determining a location within the room where the primary activity of the at least one occupant was tracked, from the tracked primary activity and the related time and location, determining the exact activity of the at least one occupant and correlating the exact activity to a preprogrammed mood setting from a list of mood settings which may be stored in a storage medium of the home automation system. When the preprogrammed mood is determined, a signal may be sent to at least one electric or electronic device for activating that at least one electric or electronic device according to the correlated mood setting.

With mood setting is meant the preferred settings of at least one electric or electronic device in a home automation system for creating a desired mood in the room of the house or building. This may, for example, be from just turning on the lights when I am in the hall to dimming the lights, closing the blinds, putting on the CD player and putting the heating a degree higher when the occupant is sitting in the couch in the evening.

A method according to embodiments of the invention makes it easy for an occupant to create a mood for each activity he or she performs. The occupant does not always have to manually set every device in a status that he or she wants at that moment or when he or she performs an activity in a room in the house or building. He or she can just start doing the activity he or she wants, and the mood settings as preferred are automatically set.

The present invention will hereinafter be described by means of different embodiments. It has to be understood that these embodiments are only for the ease of understanding the invention and are not intended to limit the invention in any way.

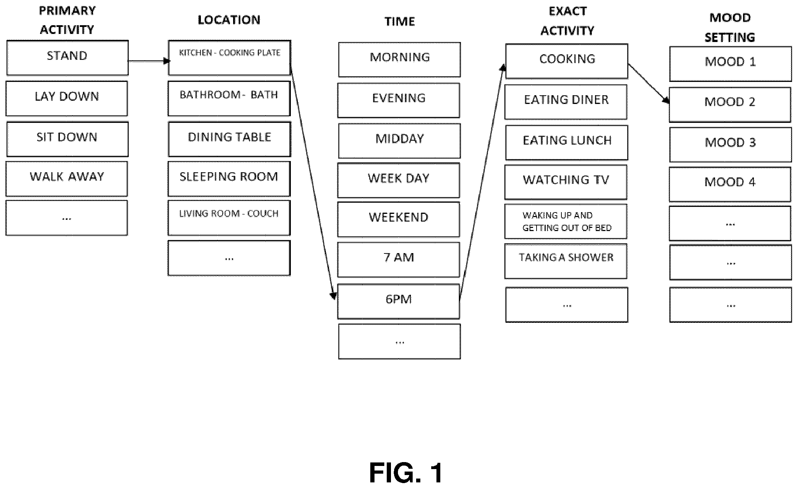

Fig. 1 schematically illustrates a method according to embodiments of the invention. First, a primary activity of at least one occupant is tracked by means of a radar sensor. A radar sensor is able to detect not just presence, but that is also able to differentiate between different activities. Examples of primary activities may be but are not limited to stand up, lay down, sit down, walk away, or the like. Hence, a primary activity may be a standard activity that a person can do, independent of the location in the room. According to embodiments of the invention, any type of radar sensor that is know by a person skilled in the art can be used for tracking activities of an occupant in a room of a home or building.

Next, the time at which the activity takes places is determined. This can be done in the home automation system by a controller by, for example, registering the time at which the activity takes place. Examples of time registrations may, for example, be the real time and correlated thereto whether it is morning, midday, afternoon or evening, but may also be an indication whether it is a weekday or a day in the weekend.

Next, a location within the room may be determined where the primary activity takes place. Examples of locations within a room may, for example, be the location of a cooking plate or a dish washer in the kitchen, the location of a bath in the bath room, the location of a dining table or a couch in the living room, etc.

From the tracked primary activity, i.e. the occupant is walking, sitting down, lying down, ..., correlated to or combined with the time registration and the location where the primary activity takes place, the exact activity of the at least one occupant is determined. This exact activity is then compared to a database of mood settings which are pre-programmed or stored as a list of mood settings in the controller of the home automation system. Such pre-programmed mood settings may be standard settings that are pre-programmed in the factory during manufacturing of the controller for the home automation system, or may be settings that are programmed by a user when he has bought the system or at any time during use of the system. As many moods as necessary or required can be stored in a processor memory of the processor of the home automation system. The programmed moods can be changed or deleted at any time by the user. In the example of Fig. 1, it may be detected that the occupant is standing up in the kitchen. The kitchen is easily determined, as the means for tracking activity is located in the kitchen. Then, it is determined that the time is 6 PM. The location where the primary activity occurs is determined to be, in the example given, at the location of the cooking plate. From the combination of the occupant standing up in the kitchen at the location of the cooking plate at 6 PM, it may be concluded that the exact activity of the occupant is cooking.

After determining that the exact activity is cooking, a signal is sent to the controller of the home automation system with the confirmation of this exact activity, from the list of pre-programmed or stored mood settings, the right mood setting for the cooking activity is chosen and the electric or electronic devices are controlled to activate settings correlated to that mood setting.

In the example given in Fig. 1, it is rather easy to accurately determine that the exact activity is cooking. However, this may sometimes be difficult to conclude, as there are many other things that an occupant can do standing when doing a primary activity at a certain time at a certain location. By determining the time and location of the primary activity, it may be nothing more than an assumption what the exact activity is. For particular rooms and particular applications, this level of determining the exact activity may be enough.

However, for particular applications, it might be required that the exact activity is determined more accurately, so as to create the correct mood setting as accurate as possible. Therefore, according to embodiments of the invention, before determining the exact activity of the at least one occupant by correlating or combining the primary activity with time and location, at last one further "activity feature" may be determined. This may increase the accuracy with which the exact activity can be determined, and thus increase accuracy of the mood that will be set as a result. An example of at least one further activity feature may, for example, be energy consumption.

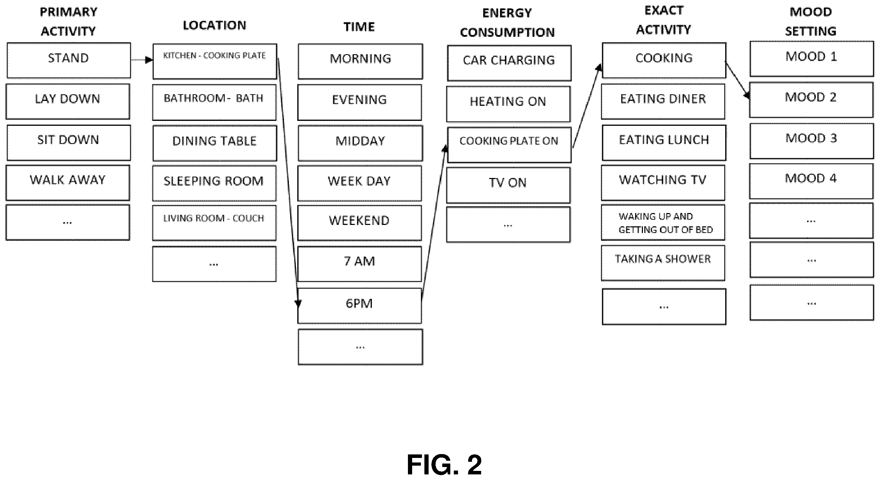

This is schematically illustrated in Fig. 2. To even more accurately determine the exact activity of the occupant, according to further embodiments, the energy consumption caused by the activity can be determined. For example, car charging, the heating is on, the cooking plate is on, etc. By taking into account these further "activity features", it may be possible to more accurately determine the exact activity of the occupant, and thus the correct mood setting correlated to that exact activity.

For the ease of explanation, the same example of Fig. 1 is extended with an additional activity feature. In the example of Fig. 2, it is detected that the occupant is standing up in the kitchen at the location of the cooking plate at 6 PM. It is further detected that the cooking plate is on, because of the energy consumption by that cooking plate. It can thus with a high certainty be decided that the occupant is cooking. Hence, the mood setting correlated to the occupant cooking will be activated by activating the at least one electric or electronic device that is required for creating that preferred mood during cooking.

According to embodiments of the invention, before creating the mood setting by activating the at least one electric or electronic device, a message may be sent from a controller to the occupant for informing the at least one occupant that a certain mood setting will be created. The signal may, for example, be sent to a user input interface such as e.g. a smart switch with a screen, a wall display (e.g. a touch screen), a smartphone or a tablet. The occupant can then either accept the proposed mood setting or reject it.

Receiving a message with the mood setting that will be created is not necessary. That is something that a user can program himself if he or she desires to receive such messages or not. If the occupant has accepted the proposed mood setting, this mood setting will be created. However, if the occupant still would like to change the setting of at least one of the at least one electric or electronic devices that were activated, he or she can still do so by means of the user input interface.

Hence, any automatically created mood setting, whether agreed to or not, can afterwards always automatically be adapted to the wishes of the occupant.

## Claims

1. A method for automatically creating a mood setting in a room of a house or building, the method comprising:
- tracking a primary activity of at least one occupant in the room by means of a radar sensor,
- determining the time at which the tracked primary activity takes place,
- determining a location within the room where the primary activity of the at least one occupant was tracked,
- from the tracked primary activity and the related time and location, determining the exact activity of the at least one occupant,
- correlating the exact activity to a mood setting from a pre-programmed or stored list of mood settings, and
- sending a signal from a controller of a home automation system to at least one electric or electronic device for activating that at least one electric or electronic device according to the correlated mood setting.

2. A method according to claim 1, further comprising, before determining the exact activity of the at least one occupant:
- tracking energy consumption correlated with the tracked activity of the at least one occupant, and
- linking this energy consumption to the tracked primary activity and the determined time or to the tracked primary activity, the determined time and the determined location for determining the exact activity of the at least one occupant.

3. A method according to claim 1 or 2, further comprising:
- sending a message to the at least one occupant for informing the at least one occupant of the mood that will be set.

4. A method according to claim 3, further comprising:
- accepting or rejecting the suggested mood.

5. A method according to any of the previous claims, further comprising:
- after the mood has been set, manually changing a setting of at least one of the at least one electric or electronic device.
